# EUROPÄISCHE PATENTANMELDUNG

(11) **EP 4 435 381 A1**
(43) Veröffentlichungstag der Anmeldung: **25.09.2024**
(21) Anmeldenummer: 24152306.7
(22) Anmeldetag: 17.01.2024
(51) Int. Cl.: G01D 3/036, G01D 3/08, G01D 21/00, G01D 18/00, G01N 25/00, G05B 19/418, G05B 23/00

(54) **VERFAHREN ZUR STEUERUNG EINER MESSVORRICHTUNG, MESSVORRICHTUNG UND SYSTEM**

(30) Priorität: 21.03.2023 DE 102023107027; 21.03.2023 US 202363453481 P
(71) Anmelder: Netzsch-Gerätebau GmbH, 95100 Selb (DE)
(72) Erfinder: BRUNNER, Martin, 95176 Konradsreuth (DE); DENNER, Thomas, 95100 Selb (DE); HILPERT, Thilo, 95100 Selb (DE); WOHLFAHRT, Fabian, 95111 Rehau (DE); SCHÖNEICH, Michael, 95100 Selb (DE); MÜLLER, Michael, 92724 Trabitz (DE); HACHMANN, Thorsten, 95199 Thierstein (DE)
(74) Vertreter: Isarpatent

(57) **Zusammenfassung**

Die vorliegende Erfindung betrifft ein Verfahren zur Steuerung einer Messvorrichtung (100), umfassend ein Überwachen von äußeren Einflüssen auf die Messvorrichtung (100) durch eine Sensoreinrichtung (110), und ein Auswerten (M2) der überwachten äußeren Einflüsse durch eine Steuereinrichtung (120) der Messvorrichtung (100). Des Weiteren betrifft die vorliegende Erfindung eine Messvorrichtung (100) sowie ein System mit mindestens einer Messvorrichtung (100).

## Beschreibung

### TECHNISCHES GEBIET DER ERFINDUNG

Die vorliegende Erfindung betrifft ein Verfahren zur Steuerung einer Messvorrichtung, eine Messvorrichtung, sowie ein System.

### HINTERGRUND DER ERFINDUNG

Das Bestimmen von Eigenschaften verschiedener Materialien ist für viele Anwendungen in Forschung und Industrie von großer Bedeutung. Hierfür werden vielfältige Messvorrichtungen verwendet, welche je nach Anwendungsbereich mitunter sehr komplexe Messvorgänge ermöglichen.

Die verwendeten Messvorrichtungen sind mitunter empfindlich was die äußere Umgebung, insbesondere was beispielsweise Temperatur oder Erschütterungen betrifft. Derartige Einflüsse können sich unerkannt von Benutzern auf die von den Messvorrichtungen ermittelten Messwerte auswirken und damit die Genauigkeit der durchgeführten Messungen beeinträchtigen.

### ZUSAMMENFASSUNG DER ERFINDUNG

Vor diesem Hintergrund liegt der vorliegenden Erfindung die Aufgabe zugrunde, die Auswirkungen unerwünschter äußerer Einflüsse auf Messergebnisse zu minimieren.

Diese Aufgabe wird gelöst durch ein Verfahren mit den Merkmalen des Patentanspruchs 1, durch eine Messvorrichtung mit den Merkmalen des Patentanspruchs 9, sowie durch ein System mit den Merkmalen des Patentanspruchs 10.

Dementsprechend ist ein Verfahren zur Steuerung einer Messvorrichtung vorgesehen. Das Verfahren umfasst ein Überwachen von äußeren Einflüssen auf die Messvorrichtung durch eine Sensoreinrichtung, und eine Auswertung der überwachten äußeren Einflüsse durch eine Steuereinrichtung der Messvorrichtung.

Des Weiteren ist eine Messvorrichtung und ein System vorgesehen, welche dazu ausgebildet sind, das erfindungsgemäße Verfahren durchzuführen.

Eine der Erfindung zugrunde liegende Idee besteht in der konstanten autonomen Überwachung und Auswertung der auf die Messvorrichtung einwirkenden äußeren Einflüsse. Hierdurch wird ein Benutzer der Messvorrichtung vorteilhaft unterstützt und entlastet, was dazu führt, dass die Auswirkung der äußeren Einflüsse auf die Messvorrichtung bzw. die von der Messvorrichtung vorgenommenen Messungen besser berücksichtigt bzw. minimiert werden können.

Gemäß eines Ausführungsbeispiels des Verfahrens ist die Sensoreinrichtung in der Messvorrichtung integriert. Hierdurch können direkt auf die Messvorrichtung einwirkende Einflüsse vorteilhaft gut überwacht werden.

Gemäß eines Ausführungsbeispiels des Verfahrens ist die Sensoreinrichtung extern von der Messvorrichtung angeordnet. Diese Konfiguration kann vor allem in Laborumgebungen mit mehreren Messvorrichtungen besonders vorteilhaft sein.

Gemäß eines Ausführungsbeispiels des Verfahrens umfassen die überwachten äußeren Einflüsse eine Umgebungstemperatur, eine Umgebungsluftfeuchtigkeit, eine Sonneneinstrahlung und/oder Vibrationen der Messvorrichtung. Diese Einflüsse können eine besonders große Auswirkung auf die Messvorrichtung haben und werden daher besonders vorteilhaft berücksichtigt.

Gemäß eines Ausführungsbeispiels des Verfahrens wird eine Warnung ausgegeben, falls die ausgewerteten, überwachten äußeren Einflüsse außerhalb eines vorbestimmten Toleranzbereichs liegen. Hierdurch kann die Korrektheit der von der Messvorrichtung durchgeführten Messungen besonders vorteilhaft sichergestellt werden.

Gemäß eines Ausführungsbeispiels des Verfahrens werden bei einem mittels der Messvorrichtung ermittelten Messwert die ausgewerteten, überwachten äußeren Einflüsse berücksichtigt. Hierdurch werden von der Messvorrichtung ermittelte Messwerte vorteilhaft exakt ermittelt.

Gemäß eines Ausführungsbeispiels des Verfahrens erfolgt die Ermittlung des Messwerts autonom durch die Steuereinrichtung. Hierdurch kann ein Benutzer der Messvorrichtung vorteilhaft entlastet werden.

Gemäß eines Ausführungsbeispiels des Verfahrens wird eine Benachrichtigung ausgegeben, falls die ausgewerteten, überwachten äußeren Einflüsse eine baldige Wartung oder Ersetzung einzelner Komponenten der Messvorrichtung notwendig erscheinen lassen. Hierdurch können vorteilhaft weitere, indirekte Auswirkungen von äußeren Einflüssen berücksichtigt werden.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren nach einem Ausführungsbeispiel der vorliegenden Erfindung;
- Fig. 2: eine schematische Darstellung einer Messvorrichtung nach einem Ausführungsbeispiel der vorliegenden Erfindung; und
- Fig. 3: eine schematische Darstellung eines Systems mit einer Vielzahl an Messvorrichtungen nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

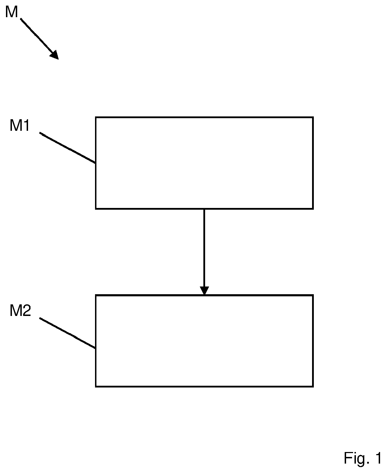

Fig. 1 zeigt ein schematisches Flussdiagramm für ein Verfahren M zum Steuern einer Messvorrichtung nach einem Ausführungsbeispiel der vorliegenden Erfindung.

In einem ersten Verfahrensschritt M1 überwacht eine Sensoreinrichtung äußere Einflüsse auf die Messvorrichtung. In einem weiteren Verfahrensschritt M2 wertet eine Steuereinrichtung der Messvorrichtung die überwachten äußeren Einflüsse aus.

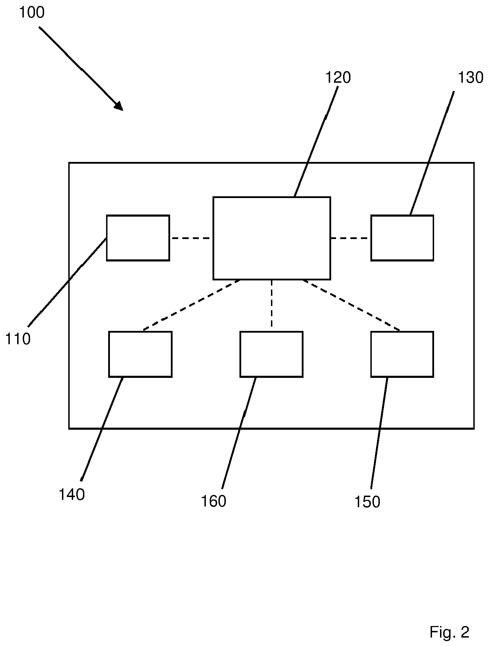

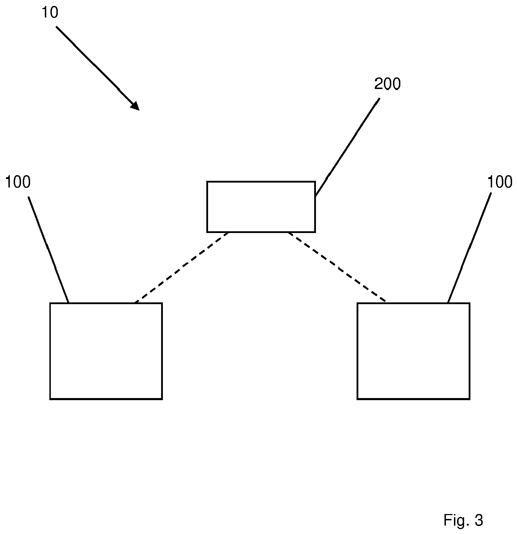

Das gezeigte Verfahren M wird im Nachfolgenden mit Bezug auf die Figuren 2 und 3 im Detail beschrieben.

Fig. 2 zeigt eine schematische Darstellung einer Messvorrichtung 100 nach einem Ausführungsbeispiel der vorliegenden Erfindung.

Die Messvorrichtung 100 weist eine Sensoreinrichtung 110, eine Steuereinrichtung 120, eine Datenbank 130, eine Ausgabeeinrichtung 140, eine Eingabeeinrichtung 150, und eine Probenaufnahmeeinrichtung 160 auf.

Die Sensoreinrichtung 110 ist in dem hier gezeigten Ausführungsbeispiel in die Messvorrichtung 100 integriert und dazu ausgebildet, äußere Einflüsse auf die Messvorrichtung 100 zu überwachen. Diese äußeren Einflüsse können beispielsweise eine Umgebungstemperatur, eine Umgebungsluftfeuchtigkeit, eine Sonneneinstrahlung und/oder Vibrationen der Messvorrichtung umfassen.

Die Steuereinrichtung 120 ist dazu ausgebildet, die von der Sensoreinrichtung 110 überwachten äußeren Einflüsse auszuwerten. Hierfür kann die Steuereinrichtung 120 auf die Datenbank 130 zurückgreifen, welche im vorliegenden Ausführungsbeispiel in Form eines internen Speichers der Messvorrichtung 100 ausgebildet ist. Die Datenbank 130 kann hierbei eine Vielzahl an Informationen über Materialeigenschaften und Messmethoden beinhalten, wodurch die Steuereinrichtung 120 in der Lage ist auszuwerten, inwiefern sich die überwachten äußeren Einflüsse auf von der Messvorrichtung 100 ermittelte Messwerte auswirken.

Die Steuereinrichtung 120 kann auch dazu ausgebildet sein, eine Warnung auszugeben, falls die ausgewerteten, überwachten äußeren Einflüsse außerhalb eines vorbestimmten Toleranzbereichs liegen. Hierfür kann beispielsweise die Ausgabeeinrichtung 140 der Messvorrichtung 100 verwendet werden. Die Ausgabeeinrichtung 140 kann hierfür beispielsweise einen Bildschirm und/oder Lautsprecher umfassen. Alternativ oder zusätzlich können auch einzelne Komponenten der Messvorrichtung 100, wie etwa die Eingabeeinrichtung 150 und die Probenaufnahmeeinrichtung 160 hervorgehoben werden, in dem etwa zu betätigende Schaltfelder oder dergleichen beleuchtet werden. Die Eingabeeinrichtung 150 kann hierfür beispielsweise eine Tastatur, einen Touchscreen oder ähnliches umfassen. Beispielsweise können die Ausgabeeinrichtung 140 und die Eingabeeinrichtung 150 in einem Touchscreen zusammengefügt sein.

Es kann auch vorgesehen sein, dass bei einem mittels der Messvorrichtung 100 ermittelten Messwert die ausgewerteten, überwachten äußeren Einflüsse berücksichtigt werden. Hierfür kann insbesondere die Steuereinrichtung 120 dazu ausgebildet sein, den entsprechenden Messwert autonom zu ermitteln.

Mit Hilfe der durch die Steuereinrichtung 120 ausgewerteten, von der Sensoreinrichtung 110 überwachten äußeren Einflüsse kann, insbesondere durch die Steuereinrichtung 120, auch abgeschätzt werden, ob für die Messvorrichtung 100 bzw. einzelner Komponenten davon, in absehbarer Zeit eine Wartung bzw. ein Austausch erforderlich sein könnte. In dem Fall kann, beispielsweise über die Ausgabeeinrichtung 140 eine entsprechende Benachrichtigung ausgegeben werden.

Insbesondere kann die Steuereinrichtung 120 auch dazu ausgebildet sein, die Datenbank 130 zu aktualisieren. Hierdurch können beispielsweise bei der Verwendung der Messvorrichtung gewonnene Erkenntnisse in die Datenbank 130 aufgenommen werden und stehen dann für zukünftige Messungen zur Verfügung. Die hierfür nötigen Informationen bezüglich der durchgeführten Messung können entweder von einem Benutzer der Messvorrichtung 100 an die Steuereinrichtung 120 übergeben werden. Alternativ oder zusätzlich kann die Steuereinrichtungen 120 die relevanten Informationen auch direkt von der Messvorrichtung 100, insbesondere von der Sensoreinrichtung 110, erhalten.

Die Messvorrichtung 100 kann insbesondere als Vorrichtung für die thermische Analyse von Materialien ausgebildet sein. Insbesondere kann die Messvorrichtung 100 für die Durchführung von Differenz-Thermoanalysen, dynamischer Differenzkalometrie, dynamisch-mechanischer Analysen, thermomechanischer Analysen oder dergleichen ausgebildet sein. Bei derartigen Messvorgängen kann die Unterstützung eines Benutzers durch die Steuereinrichtung 110 besonders vorteilhaft sein.

Fig. 3 zeigt eine schematische Darstellung eines Systems 10 mit einer Vielzahl an Messvorrichtungen 100 nach einem Ausführungsbeispiel der vorliegenden Erfindung.

Das System 10 umfasst im gezeigten Ausführungsbeispiel insgesamt zwei Messvorrichtungen 100 sowie eine Sensoreinrichtung 200.

Die einzelnen Komponenten des Systems 10 können prinzipiell genauso ausgebildet sein, wie die mit Bezug auf Figur 2 beschriebenen entsprechenden Komponenten. Lediglich die Sensoreinrichtung 200 ist in dem hier gezeigten Ausführungsbeispiel extern von den beiden Messvorrichtungen 100 als eigenständiges Gerät ausgebildet.

Da die Sensoreinrichtung 200 als eigenständige Vorrichtung ausgebildet ist, kann sie für die Verwendung mit jeder der beiden Messvorrichtungen 100 ausgebildet sein. Somit können äußere Einflüsse, welche sich auf beide Messvorrichtungen 100 auswirken, wie etwa beispielsweise eine Umgebungstemperatur, effizient und gleichmäßig von lediglich einer Sensoreinrichtung 200 überwacht werden. Auch eine Verwendung einer externen Sensoreinrichtung 200 mit in die Messvorrichtungen 100 integrierten Sensoreinrichtungen 110, wie etwa in Fig. 2 gezeigt, ist denkbar, wobei in diesem Fall vorteilhafterweise die externe und integrierten Sensoreinrichtungen 200 und 110 jeweils äußere Einflüsse überwachen, für welche sie besonders geeignet sind.

In Fig. 3 sind zwei Messvorrichtungen 100 gezeigt. Es sind allerdings beliebige Anzahlen an Messvorrichtungen 100 vorgesehen sein. Insbesondere kann auch vorgesehen sein, eine einzelne Messvorrichtung 100 mit einer externen Sensoreinrichtung 200 zu verwenden.

Die Messvorrichtungen 100 können funktionsgleich ausgebildet sein oder für die Durchführung jeweils unterschiedlicher Messungen ausgebildet sein. Dies erlaubt je nach Anwendungsbereich die zeitgleiche oder sequentielle Durchführung der jeweiligen Messvorgänge.

### BEZUGSZEICHENLISTE

- 10: System
- 100: Messvorrichtung
- 110: Sensoreinrichtung
- 120: Steuereinrichtung
- 130: Datenbank
- 140: Ausgabeeinrichtung
- 150: Eingabeeinrichtung
- 160: Probenaufnahmeeinrichtung
- 200: Sensoreinrichtung
- M: Verfahren
- M1: Verfahrensschritt
- M2: Verfahrensschritt

## Patentansprüche

1. Verfahren (M) zur Steuerung einer Messvorrichtung (100), umfassend
- ein Überwachen (M1) von äußeren Einflüssen auf die Messvorrichtung (100) durch eine Sensoreinrichtung (110; 200); und
- ein Auswerten (M2) der überwachten äußeren Einflüsse durch eine Steuereinrichtung (120) der Messvorrichtung (100).

2. Verfahren (M) nach Anspruch 1, wobei die Sensoreinrichtung (110) in der Messvorrichtung (100) integriert ist.

3. Verfahren (M) nach Anspruch 1, wobei die Sensoreinrichtung (200) extern von der Messvorrichtung (100) angeordnet ist.

4. Verfahren (M) nach einem der vorhergehenden Ansprüche, wobei die überwachten äußeren Einflüsse eine Umgebungstemperatur, eine Umgebungsluftfeuchtigkeit, eine Sonneneinstrahlung und/oder Vibrationen der Messvorrichtung (100) umfassen.

5. Verfahren (M) nach einem der vorhergehenden Ansprüche, weiterhin umfassend ein Ausgeben einer Warnung, falls die ausgewerteten, überwachten äußeren Einflüsse außerhalb eines vorbestimmten Toleranzbereichs liegen.

6. Verfahren (M) nach einem der vorhergehenden Ansprüche, wobei bei einem mittels der Messvorrichtung (100) ermittelten Messwert die ausgewerteten, überwachten äußeren Einflüsse berücksichtigt werden.

7. Verfahren (M) nach Anspruch 6, wobei die Ermittlung des Messwerts autonom durch die Steuereinrichtung (120) erfolgt.

8. Verfahren (M) nach einem der vorhergehenden Ansprüche, weiterhin umfassend ein Ausgeben einer Benachrichtigung, falls die ausgewerteten, überwachten äußeren Einflüsse eine baldige Wartung oder Ersetzung einzelner Komponenten der Messvorrichtung (100) notwendig erscheinen lassen.

9. Messvorrichtung (100), welche dazu ausgebildet ist, ein Verfahren (M) nach einem der Ansprüche 1 bis 8 durchzuführen.

10. System (10) mit mindestens einer Messvorrichtung (100) und einer Sensoreinrichtung (200), wobei das System (10) dazu ausgebildet ist, ein Verfahren (M) nach einem der Ansprüche 1 bis 8 durchzuführen.
